# EUROPEAN PATENT SPECIFICATION

(11) **EP 3 750 836 B1**
(45) Date of publication and mention of the grant of the patent: **19.07.2023**
(21) Application number: 19179830.5
(22) Date of filing: 12.06.2019
(51) Int. Cl.: B65G 53/22

(54) **SUCTION DEVICE FOR DISCHARGING AND CONVEYING MATERIAL**
SAUGVORRICHTUNG ZUM AUSBRINGEN UND FÖRDERN VON MATERIAL
DISPOSITIF D'ASPIRATION POUR DÉCHARGER ET TRANSPORTER UN MATÉRIAU

(43) Date of publication of application: 16.12.2020
(73) Proprietor: REEL Alesa AG, 8048 Zürich (CH)
(72) Inventor: ERNST, Patrik, 5436 Würenlos (CH); FLÜELER, Stefan, 8636 Wald (CH); SCHULER, Guido, 6422 Steinen (CH)
(74) Representative: Piticco, Lorena

(56) References cited:
- CA-A- 1 091 277
- DE-B- 1 258 789
- FR-A- 1 213 087
- US-A- 2 316 814
- US-A- 2 804 349

## Description

### TECHNICAL FIELD

The present invention relates to a suction device for discharging and/or conveying material according to claim 1 and a method for discharging and/or conveying material, preferably from a ship, using such a suction device according to claim 15, respectively.

### PRIOR ART

Many devices for discharging and/or conveying material are known in the art. For example, US 4 475 848 discloses a vacuum conveyor apparatus for the pneumatic conveyance of loose bulk materials comprising a cabinet containing an upright separator and a vacuum pump aggregate. The separator has a conical bottom for collecting the loose bulk material and includes a delivery device for the material in the form of a compartment rotor. From DE 1 258 789 a fluidizing discharge apparatus according to the preamble of claim 1 is known, which comprises an upright receptacle and a blower used to generate negative pressure in the receptacle. A material column is contained in the receptacle, wherein the material to be discharged is fluidized by means of fluidizing units provided in a lower portion of the material column.

FR 1 213 087 discloses a horizontal conveyor comprising a material pipe and a pressure chamber being separated from the pipe by a gas permeable mat. A partition is installed in the pipe in the vicinity of a vertical wall, which partition serves the purpose of directing the material through a downstream opening.

US 2 804 349 A discloses an apparatus for controlling and regulating gravity flow of materials to a feeder being effective to obstruct the flow of the material.

US 2 316 814 A discloses a feeder for controlling and regulating the flow of powdered material, wherein the flow is controlled and regulated by means of obstructions to the normal flow of gravity.

Disadvantages associated with the devices known from the prior art are caused by interactions of the material with the device. In particular, frictional forces can establish between the material and the device, which result in an unstable or discontinuous discharging and/or conveying of the material.

### SUMMARY OF THE INVENTION

It is an object of the present invention to provide an improved suction device for discharging and/or conveying material. In particular, it is an object to provide a suction device which enables a stable and continuous discharging and/or conveying of material.

This object is achieved with a suction device according to claim 1. In particular, a suction device for discharging and/or conveying material, preferably powdery material, in particular bulk material, is provided which comprises a receiving bin, a material chamber, an exhaust device, and at least a first fluidizing device and at least a second fluidizing. The receiving bin extends along a vertical direction and comprises a bin wall with an inlet opening and an outlet opening. The inlet opening is arranged in an upper region of the receiving bin and the outlet opening is arranged in a lower region of the receiving bin such, that the material to be discharged is suctioned into the receiving bin through the inlet opening and flows within the receiving bin from the inlet opening towards the outlet opening along the vertical direction. The material chamber comprises a chamber wall with an inlet opening and an outlet opening, wherein the receiving bin and the material chamber are in connection with each other via the outlet opening of the receiving bin and the inlet opening of the material chamber. The exhaust device is in connection with the receiving bin and is configured to remove air from within the receiving bin towards an outside of the suction device, whereby a negative pressure is generated within the suction device. The first fluidizing device is arranged in the receiving bin and the second fluidizing device is arranged in the material chamber, wherein the first fluidizing device is configured to fluidize the material being introduced into the receiving bin and to transport the fluidized material from the receiving bin into the material chamber, and wherein the second fluidizing device is configured to transport the fluidized material through the material chamber and to discharge the fluidized material from the material chamber via the outlet opening of the material chamber. The suction device further comprises a deflector element which is arranged in the lower region of the receiving bin and which extends from the bin wall at least partially into the receiving bin along a horizontal direction running perpendicularly to the vertical direction so as to define a passage. The deflector element is arranged and configured to deflect the fluidized material impinging on the deflector element such, that the fluidized material is transported to the material chamber through the passage.

That is to say, the suction device according to the invention comprises a vertically or upright receiving bin into which the material to be discharged or conveyed is suctioned in. The suctioning is enabled by the exhaust device, which generates a negative pressure in the suction device. In the context of the present invention a negative pressure is understood as a pressure being below the ambient pressure. It is particularly preferred that a negative pressure between about 700 mbar to 100 mbar, preferably between about 600 mbar to 100 mbar is generated within the suction device. Hence, the suction device can be understood as a vacuum suction device, wherein suctioning is achieved by means of the vacuum established within the suction device. Due to the vertical or upright position of the receiving bin the material that has been suctioned into the receiving bin flows from the upper region of the receiving bin towards the lower region of the receiving bin because of the gravitational force. Moreover, a flow of the material is further supported by the at least one fluidizing device being arranged in the receiving bin, which fluidizes the material in a manner that is known to the person skilled in the art. In the lower region of the receiving bin at least part of the material impinges on the deflector element. Due to the particular arrangement and design of the deflector element, the impinging material is laterally deflected with respect to the vertical direction and thereby guided to the passage defined by the deflector element. Subsequently, the material flows from the receiving bin into the material chamber via the passage. The deflector element can thus be understood as a deflecting element and at the same time also guiding element, which enables a withdrawal of the material from the receiving bin in a targeted manner. In particular, the material is directed to the outlet opening of the receiving bin in a targeted manner. It has been found that this influences the flow properties of the material in a favorable manner, wherein friction forces between the material and the bin wall are reduced or even prevented. This enables a stable and continuous discharging and/or conveying of the material.

It is preferred that the receiving bin, when seen in cross-section, defines a clear width along the horizontal direction, wherein the deflector element extends along the horizontal direction by a length being between about 30% to 70%, preferably about 50% of the clear width of the receiving bin. In other words it is preferred that the deflector element has an elongated shape and extends at least partially through the receiving bin with respect to the horizontal direction. In this way also the passage defined by the deflector element has an elongated shape and extends at least partially through the receiving bin with respect to the horizontal direction.

According to the invention, a lower part of the deflector element extends along the vertical direction until a bottom region of the receiving bin. Alternatively but in an embodiment not covered by the claims of the present invention, a distance can be formed between the lower part of the deflector element and the bottom region of the receiving bin, the distance preferably being between about 1 Millimetre to 500 Millimetre, more preferably between about 100 Millimetre and 300 Millimetre, particularly preferably about 200 Millimetre.

That is to say, according to the present invention the deflector element extends all the way down to the bottom region of the receiving bin with respect to the vertical direction. In this case the deflector element can be seen as an essentially closed element, which is closed off by the bottom region of the receiving bin on its underside facing the bottom region and which is closed off by the bin wall on its side facing the outlet opening of the receiving bin. On its side being opposite to the outlet opening of the receiving bin the deflector element defines an inlet or opening through which the material can enter the passage defined by the deflector element. The deflector element according to this aspect can thus be seen as a tunnel. An advantage associated with such a design is the achievement of a fluidization in a controlled manner. In particular, fluidizing gas is thereby prevented from flowing sideways from inside the passage towards an outside of the passage. In a second aspect, not part of the claimed invention, it is conceivable that the underside of the deflector element is spaced apart from the bottom region of the receiving bin. Advantages of such a design are an improved maintenance of the fluidization and a lateral accessibility of small amounts of fluidized material into the passage.

It is particularly preferred that the at least one first fluidizing device is arranged in the bottom region of the receiving bin. It is furthermore preferred that the receiving bin comprises two or more first fluidizing devices that are preferably equally distributed over the bottom region. Moreover, it is preferred if at least one of the first fluidizing devices is arranged in the passage defined by the deflector element. Hence, in the just-described first aspect the lower part of the deflector element thus extends along the vertical direction up to the first fluidizing device(s). In the just-described second aspect the distance or spacing is formed between the first fluidizing device(s) and the lower part of the deflector element.

It is preferred that at least an upper part of the deflector element is arranged before the outlet opening of the receiving bin with respect to the vertical direction when viewed from the inlet opening of the receiving bin towards the outlet opening of the receiving bin. Alternatively, it is also preferred that at least the upper part of the deflector element and the outlet opening of the receiving bin are arranged at essentially a same height with respect to the vertical direction.

That is to say, it is conceivable that at least part of the deflector element is arranged above or at essentially the same height as the outlet opening, in particular as an upper limiting edge of the outlet opening, when viewed in the installed position. This ensures that the material which is flowing down along the vertical direction within the receiving bin is not directly drawn through the outlet opening of the receiving bin but impinges on the deflector element. The guiding element thus also serves the purpose of a shield.

It is conceivable that the deflector element, preferably its upper part, runs obliquely along the horizontal direction. However, it is likewise conceivable that the deflector element, preferably its upper part, runs parallel to the horizontal direction.

Thus, in the former case it is conceivable that the entire deflector element or only part of it is inclined when viewed in the installed position, whereas in the latter case it is conceivable that the entire deflector element or only part of it is arranged in a straight manner when viewed in the installed position. The inclined arrangement has a positive effect on the free flowing characteristics of the fluidized material.

The deflector element, preferably its upper part, can run obliquely along the horizontal direction and define an angle of inclination of between about 1° to 15°, preferably between about 2° to 10°, particularly preferably between about 3° to 5°. Additionally or in the alternative the deflector element can run downwards with respect to the horizontal direction and when viewed in the direction of the outlet opening of the receiving bin.

That is, in case of a deflector element running obliquely along the horizontal direction (entirely or only partly) it is preferred that its height in the region of the bin wall is smaller than its height on the opposite side, in the region of its inlet or opening, when viewed in the installed position. Various shapes of the deflector element are conceivable. For example, the deflector element can have an essentially semi-circular shape, an essentially squared shape being open on one side, an essential gable shape, etc. when seen in the longitudinal section. A gable shape is understood as having the shape of a roof comprising two side walls extending parallel to one another along the vertical direction and, in an upper part, merging into a pointed end by means of inclined walls extending from said parallel walls.

The deflector element preferably extends centrally from the bin wall of the receiving bin with respect to a width of the receiving bin when seen in cross-section.

Consequently, it is preferred that the outlet opening of the receiving bin is provided centered in the bin wall with respect to a width of the receiving bin when seen in cross-section, too. For example, in case of a cylindrical receiving bin it is preferred that the outlet opening of the receiving bin and the deflector element are arranged at the location of the largest diameter of the receiving bin with respect to the horizontal direction. In the case of a squared or rectangular receiving bin, it is preferred that the outlet opening of the receiving bin and the deflector element are arranged at half the length of the side of the squared or rectangular receiving bin with respect to a transverse direction running perpendicularly to the vertical direction and the horizontal direction.

The receiving bin and the material chamber can be arranged immediately adjacent to one another. In this case it is preferred that the outlet opening of the receiving bin and the inlet opening of the material chamber are immediately adjacent to one another, as well. It is possible that the outlet opening of the receiving bin and the inlet opening of the material chamber have the same or a different diameter.

The material chamber is preferably arranged at an angle with respect to the receiving bin. For example, it is conceivable that the material chamber is arranged so as to essentially extend along the horizontal direction. In this case it is preferred that the angle between the material chamber and the receiving bin is between about 90° and 96°. That is, it is conceivable that the material chamber extends straight along the horizontal direction or that it is slightly inclined with respect to the horizontal direction. In the case of an inclined material chamber it is preferred that the material chamber runs downward when seen in the installed position starting from the inlet opening of the material chamber towards the outlet opening of the material chamber.

A filter device can be arranged within the receiving bin in the region of the connection between the receiving bin and the exhaust device. Alternatively, it is conceivable that the filter device is arranged outside the receiving bin and between the receiving bin and the exhaust device. The filter device can be a dust filter as it is known in the art and serves the purpose of protecting the exhaust device and the environment from dust and other particles.

The suction device is preferably configured such, that the negative pressure generated within the suction device is maintained by means of a material column that is formed by the material being fed into the receiving bin. Additionally or in the alternative it is conceivable that the suction device comprises at least one sluice device being configured and arranged so as to maintain the negative pressure generated within the receiving bin, the sluice device preferably being a gate valve, a rotary feeder or a valve lock.

That is, the negative pressure or vacuum that is generated by the exhaust device within the suction device can be maintained by a material column formed in the receiving bin and by the material that is suctioned into the receiving bin. However, it is likewise conceivable to maintain said negative pressure or vacuum by other mechanisms such as a sluice device in the form of a gate valve, a rotary feeder or a valve lock which in each case serve as a barrier towards an outside of the suction device. However, it should be understood that the suction device can comprise both, a maintenance of the negative pressure or vacuum by means of the material column as well as sluice device. In this case the sluice device can serve the purpose of a mechanical control which takes a closed position in the event that the material column is no longer capable of maintaining the negative pressure. In the closed position the sluice device seals the receiving bin and the negative pressure established therein against an outside. During normal operation, i.e. when the material column is capable of sealing the negative pressure towards an outside, the sluice device takes an opened position. To this end it is preferred to provide the sluice device in the region of the outlet opening of the receiving bin or in the region of the inlet opening of the material chamber. Besides, it should be noted that the sluice device can also be used for controlling a material flow. Namely, by providing the sluice device in the material chamber and by allowing it to take several different opening positions such as a 100 % opened position and a 90 % opened position, etc., the material flow through the material chamber can be regulated.

A limiting element can arranged within the material chamber, the limiting element limits a cross-section of the material chamber such, that a desired maximum flow rate of the fluidized material through the material chamber is obtained.

The limiting element can have the form of a plate that is insertable into the material chamber. Depending on the amount of insertion the cross-section of the material chamber, the cross-section of the material chamber at the position of the limiting element is reduced. In doing so the limiting element can be configured as a stationary element that is fixedly installed in the material chamber or as a variable element the position of which, i.e. the amount of insertion, can be varied.

The suction device preferably further comprises a pneumatic control, wherein the pneumatic control comprises the first fluidizing device and/or the second fluidizing device and is configured to adjust a height of the material and/or of the fluidized material within the receiving bin and/or to adjust a flow rate of the fluidized material through the material chamber.

Hence, by adjusting the amount of gas or the gas pressure supplied to one or more of the first fluidizing devices and/or to one or more of the second fluidizing devices, as well as by selectively switching on and off one or more of the first fluidizing devices and/or one or more of the second fluidizing devices, parameters such as the height of the material or of the fluidized material or the flow rate of the fluidized material can be selectively controlled and adjusted. The suction device according to the invention can therefore comprise several controls, namely a pneumatic control as just explained as well as a mechanical control comprising one or more sluice devices as mentioned above.

It is preferred that the suction device further comprises at least a first detection device and/or at least a second detection device, wherein the first detection device is arranged in the receiving bin and is configured to detect a first state such as a height of the material or of the fluidized material within the receiving bin, and wherein the second detection device is arranged in the material chamber and is configured to detect a second state such as a height or a flow rate of the fluidized material within the material chamber.

The first detection device is preferably operatively connected with the one or more first fluidizing devices and/or the sluice device. The second detection device is preferably operatively connected with the one or more first fluidizing devices and/or the one or more second fluidizing devices. It is particularly preferred that the first detection device is operatively connected with the first fluidizing device(s) and the sluice device so as to form part of the pneumatic and the mechanical control, and that the second detection device is operatively connected with first fluidizing device(s) and the second fluidizing device(s) so as to form part of the pneumatic control. The first detection device and/or the second detection device preferably are level sensors or level transmitters as they are known on the art.

In another aspect a method for discharging and/or conveying material, preferably from a ship, using a suction device as described above is provided, the method comprising the steps of:
- Suctioning the material to be discharged into the receiving bin;
- Fluidizing the material being introduced into the receiving bin using the first fluidizing device;
- Transporting the fluidized material from the receiving bin into the material chamber using the first fluidizing device;
- Transporting the fluidized material in the material chamber using the second fluidizing device and discharging the fluidized material from the material chamber via the outlet opening of the material chamber.

The fluidized material impinges on the deflector element such, that the impinging fluidized material is deflected and transported to the material chamber through the passage defined by the deflector element.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a side sectional view through a suction device comprising a deflector element and a filter device according to a first embodiment;
- Fig. 2: shows a side sectional view through a suction device comprising a filter device according to a further embodiment;
- Fig. 3: shows a front sectional view through a suction device comprising a deflector element according to a further embodiment;
- Fig. 4: shows a partial front sectional view through a suction device comprising a deflector element according to a further embodiment;
- Fig. 5: shows a partial cross-sectional view through the suction device according to figure 1;
- Fig. 6: shows a partial side sectional view through a suction device comprising a deflector element according to a further embodiment;
- Fig. 7: shows a partial side sectional view through a suction device comprising a deflector element according to a further embodiment.

### DESCRIPTION OF PREFERRED EMBODIMENTS

With respect to the figures several aspects of a suction device 1 for discharging and/or conveying material, preferably powdery material, in particular bulk material, are discussed in detail. Said suction device 1 can serve the purpose of removing material from an initial location or device such as a ship and to transport or convey said material to an end location or device. If the material is removed from a ship the suction device is commonly referred to as a ship discharger.

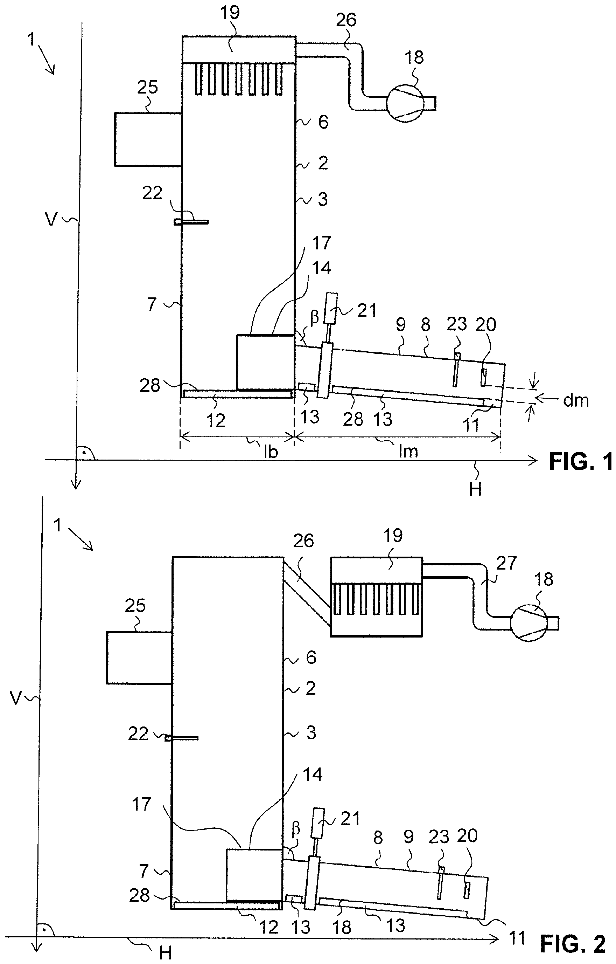

The suction device 1 according to the invention comprises, inter alia, a receiving bin 2, a material chamber 8, and an exhaust device 18. When seen in the installed position, the receiving bin 2 extends along a vertical direction V and comprises a bin wall 3 with an inlet opening 4 and an outlet opening 5. The inlet opening 4 is arranged in an upper region 6 of the receiving bin 2 and the outlet opening 5 is arranged in a lower region 7 of the receiving bin 2 such, that the material to be discharged can be suctioned into the receiving bin 2 through the inlet opening 4 and can then flow within the receiving bin 2 from the inlet opening 4 towards the outlet opening 5 along the vertical direction V. To this end an inlet in the form of a tube 25 is attached to the inlet opening 4 of the receiving bin 2 on an outside of the bin wall 3, wherein said inlet 25 can be introduced into the initial location or device, for example into the ship, in order to transfer the material from within the ship into the suction device 1. The material chamber 8 comprises a chamber wall 9 with an inlet opening 10 and an outlet opening 11, wherein the receiving bin 2 and the material chamber 8 are in connection with each other via the outlet opening 5 of the receiving bin 2 and the inlet opening 10 of the material chamber 8. In the present case the receiving bin 2 and the material chamber 8 are in immediate proximity to one another. That is, the material chamber 8 adjoins the receiving bin in the lower region 7 of the receiving bin 2. Moreover, in the present example the material chamber 8 is arranged at an angle β with respect to the receiving bin 2. That is, whereas the receiving bin 2 extends along the vertical direction V, the material chamber 8 is arranged at an angle β with respect to the vertical direction V. In other words, the material chamber 8 extends essentially along a horizontal direction H running perpendicularly to the vertical direction V. Here, said angle β corresponds to about 95°, i.e. the material chamber 8 is arranged essentially perpendicularly with respect to the receiving bin 2 but also, as best seen in figures 1 and 2, arranged slightly inclined downwards when seen in the installed position and from the inlet opening 10 of the material chamber 8 towards the outlet opening 11 of the material chamber 8. This slight inclination serves the purpose of simplifying the transportation or conveyance of the material through the material chamber 8 because of the gravitational force.

The exhaust device 18 is provided here in the form of a vacuum blower which removes air from within the receiving bin 2 towards an outside of the suction device 1, whereby a negative pressure is generated within the suction device 1. This negative pressure enables the suction device 1 to remove material via the inlet 25 from the initial location or device and to introduce said material through the inlet opening 4 into the receiving bin 2. The exhaust device 18 is configured to generate a negative pressure within the suction device 1 in the order of about 100 Millibar to 600 Millibar. In order to prevent a contamination or pollution of the exhaust device 18 a filter device 19 is provided between the receiving bin 2 and the exhaust device 18. In this context it should be noted that the suction devices 1 depicted in figures 1 and 2 differ from one another in that the filter device 19 is arranged within the receiving bin 2, here in its upper region 6, in the suction device 1 according to figure 1, whereas the filter device 19 is arranged outside the receiving bin 2 in the suction device 1 according to figure 2. Hence, it is conceivable to provide the filter device 19 as an integral and/or internal component of the receiving bin 2 or as a separate component of the receiving bin 2, respectively. In the former case the filter device 19 is in connection with the exhaust device 18 via a first exhaust duct 26, wherein said first exhaust duct 26 extends from the suction device 1 to the filter device 19 through an exhaust opening (not visible) provided in the upper region 6 of the bin wall 3 of the receiving bin 2. In the latter case, the filter device 19 is on the one side connected to the exhaust opening (not visible) provided in the bin wall 3 of the receiving bin 2 via the first exhaust duct 26 and on the other side it is connected to the exhaust device 18 via a second exhaust duct 27.

Moreover, at least a first fluidizing device 12 and at least a second fluidizing 13 are provided in the suction device 1, wherein the first fluidizing device 12 is arranged in the receiving bin 2 and the second fluidizing device 13 is arranged in the material chamber 8. The first fluidizing device 13 is configured to fluidize the material being introduced into the receiving bin 2 and to transport the fluidized material from the receiving bin 2 into the material chamber 8. The second fluidizing device 13 is configured to transport the fluidized material through the material chamber 8 and to discharge the fluidized material from the material chamber 8 via the outlet opening 11 of the material chamber 8. The first and second fluidizing devices 12, 13 are fluidizing devices as they are known in the state of the art. That is, they comprise in each case a gas-permeable element 28 such as a textile or fabric or porous wall, wherein fluidizing gas can permeate through the pores of the textile or fabric or porous wall. To this end the gas-permeable elements are in connection with a gas source which provides the fluidizing gas to the gas-permeable elements. Although not depicted in the figures conceivable gas sources are gas supply lines, which connect a fluidizing fan, blower or compressed air network (not shown) with gas inlets provided on the receiving bin 2 and the material chamber 8. Said gas inlets in turn are in connection with the gas-permeable elements 28 of the first and second fluidizing devices 12, 13. Said gas-permeable elements 28 can be arranged on or in housings 29 which are in turn arranged within the receiving bin 2 and the material chamber 8, respectively. In the presence of a fluidizing gas in the receiving bin 2 the material within the receiving bin 2 is fluidized and transported from the receiving bin 2 into the material chamber 8. Moreover, in the presence of a fluidizing gas in the material chamber 8 the fluidization of the material that has been transported into the material chamber 8 is maintained and said fluidized material is transported along the material chamber 8 towards the outlet opening 11 of the material chamber 8. The gas-permeable elements 28 of the first and second fluidizing devices 12, 13 can therefore be seen as defining a transport surface 30 along which the material is transported or conveyed, respectively.

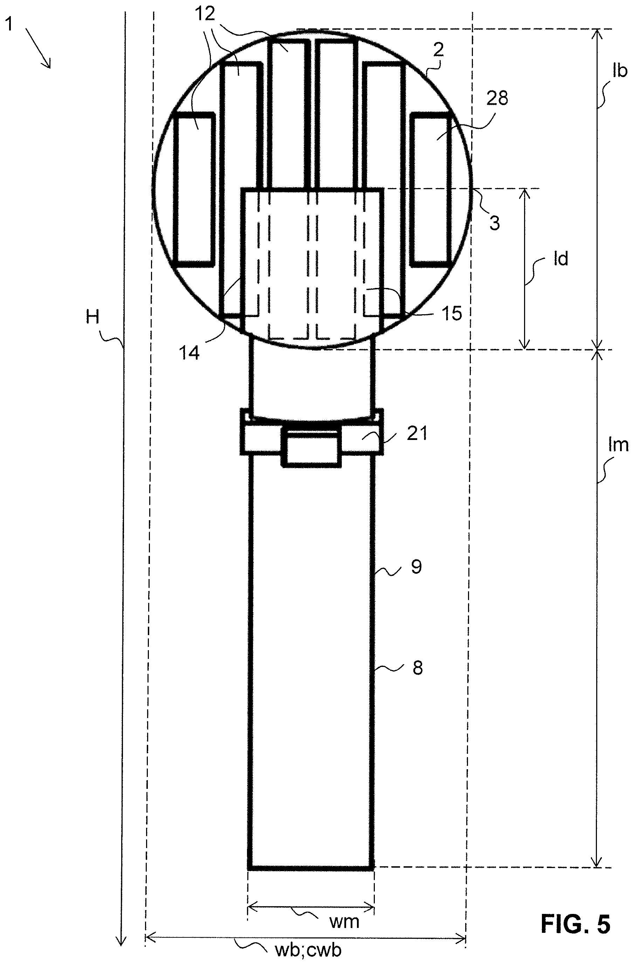

In order to ensure that the powdery material is fluidizable to a desired extent and is transportable or conveyable along the entire suction device 1, it is preferred to provide fluidizing devices 12, 13 along an entire length lb and width wb of the receiving bin as well as along an entire length lm and width wm of the material chamber 8. This is particularly preferably achieved by providing two or more first fluidizing devices 12 in the receiving bin 2 as well as two or more second fluidizing devices 13 in the material chamber 8. Namely, in the present example and as follows from figure 5, the receiving bin 2 comprises six first fluidizing devices 12 which have in each case an elongated shape and which extend along the horizontal direction H running perpendicularly to the vertical direction V. The transport surfaces 30, i.e. the gas-permeable elements 28, in each case extend along an entire length lb of the receiving bin 2 with respect to the horizontal direction H. However, due to the cylindrical shape of the receiving bin 2 according to the present example, the individual first fluidizing devices 12 have different lengths along the horizontal direction H. In the case that the receiving bin 2 has another geometry such as a squared shape, for example, it is of course conceivable that the first fluidizing devices 12 have equal lengths along the horizontal direction H. As follows from figures 1 and 2, for example, the material chamber 8 comprises two second fluidizing devices 13, wherein a first of the two second fluidizing devices 13 is arranged in the region of the receiving bin 2 and a second of the two second fluidizing 13 devices is arranged after said first fluidizing device and extends along a major part of the length lm of the material chamber 8. Hence, the two second fluidizing devices 13 have different lengths, too. In addition, in the present example the two second fluidizing devices 13 are separated from one another by a sluice device 21 in the form of a gate valve, the function of which will be further explained below.

The suction device 1 is configured such, that the negative pressure generated within the suction device 1 is maintained by means of a material column that is formed by the material being suctioned into the receiving bin 2. That is, the material itself serves as a barrier between the negative pressure generated within the suction device 1 and an outside. The sluice device 21 mentioned above and which corresponds here to a gate valve arranged in the material chamber 8 serves the purpose of a mechanical control that ensures the maintenance of the negative pressure within the suction device 1. Namely, in the event that the material column is no longer able to maintain a desired negative pressure, for example because its height along the vertical direction V has become too small, the gate valve 21 closes, whereby the negative pressure is sealed within the receiving bin 2. However, in the working state, i.e. when the material column is able to maintain the negative pressure within the suction device 1, the gate valve 21 is in an opened position. To this end it is conceivable that the gate valve 21 adapts one or more opening positions, for example an entirely opened position and two or more different semi-opened positions. In this way a flow rate of the fluidized material through the suction device 1, in particular through the material chamber 8, can be adjusted. In this context it should be noted that other sluice devices 21 are conceivable, too. For example, the sluice device 21 can be provided by means of a rotary feeder or a valve lock, which can seal the receiving bin 2 from the material chamber 8. In addition, a further limitation of the flow rate of the fluidized material can be achieved by means of a limiting element 20. As follows from figures 1 and 2, a limiting element 20 in the form of a plate 20 is arranged within the material chamber 8, wherein the limiting element 20 extends into the material chamber 8 so as to at least partially reduce a cross-section dm of the material chamber 8. The cross-section dm of the material chamber 8 is thereby reduced such, that a desired maximum flow rate of the fluidized material through the material chamber 8 can be obtained.

In addition to such a mechanical control the suction device 1 also comprise a pneumatic control, wherein the pneumatic control comprises the first fluidizing device(s) 12 and the second fluidizing device(s) 13 and is configured to adjust a height of the material or of the fluidized material, respectively, within the receiving bin 2 as well as to adjust a flow rate of the fluidized material through the material chamber 8 by selectively operating the first and second fluidizing devices 12, 1 3. A selective operation of the fluidizing devices 12, 13 means that one or more of the first fluidizing devices 12 and/or one or more of the second fluidizing devices 13 are selectively switched on and off. In addition or in the alternative, a selective operation of the fluidizing devices 12, 13 can be achieved by selectively adjusting the gas amount or pressure of fluidizing gas that is delivered to one or more of the first and/or second fluidizing devices 12, 13.

In order to selectively operate the fluidizing devices 12, 13 and the sluice device 21 the suction device 1 further comprises at least a first detection device 22 and at least a second detection device 23. Here, a first detection device 22 in the form of a level sensor, in particular a level switch or a level transmitter as it is known in the art, is provided within the receiving bin 2. As best seen in figures 1 to 3, said level sensor 22 is arranged approximately at half a height of the receiving bin 2 with respect to the vertical direction V. Said position defines a minimal height for the material column that is necessary for the maintenance of the negative pressure within the suction device 1. In this way it is possible for the level sensor 22 to detect at least one first state, for example the height of the material or of the fluidized material within the receiving bin 2. In the event that the detected height of the material or the fluidized material is below a threshold value the sluice device 21, here the gate valve, is closed. In the event that the detected level does not correspond to a desired level the operation of one or more of the first fluidizing devices 12 is selectively adjusted, for example by switching them on/off or by changing the pressure of the fluidizing gas. The second detection device 23 preferably corresponds to a level sensor, too, and is arranged in the material chamber 8 so as to detect at least one second state such as the height or the flow rate of the fluidized material within the material chamber 8. In the event that the detected height or flow rate of the fluidized material within the material chamber 8 is above or below a respective threshold value the operation of one or more of the first fluidizing devices 12 and/or one or more of the second fluidizing devices 13 is selectively adjusted, for example by switching them on/off or by changing the pressure of the fluidizing gas. Hence, it can be said that the first detection device 22 is operatively connected with the first fluidizing device(s) and the sluice device 21 and that the second detection device 23 is operatively connected with the first fluidizing device(s) 12 and the second fluidizing device(s) 13, respectively. In other words, the first detection device 22 forms part of the pneumatic control and the mechanical control whereas the second detection device 23 forms part of the pneumatic control.

The suction device 1 further comprises a deflector element 14 which is arranged in the lower region 7 of the receiving bin 2 and which extends from the bin wall 3 at least partially into the receiving bin 2 along the horizontal direction H so as to define a passage 15. The deflector element 14 is arranged and configured to deflect the fluidized material impinging on the deflector element 14 such, that the fluidized material is transported to the material chamber 8 through the passage 15. Hence, the deflector element 14 can be understood to define a passage 15 or tunnel, through which the fluidized material is transported through the receiving bin 2 and via the outlet opening 5 of the receiving bin 2 and the inlet opening 10 of the material chamber 8 into the material chamber 8. Moreover, the deflector element 14 is arranged and configured such, that fluidized material impinging on the deflector element 14 is laterally deflected with respect to the vertical direction V. The arrangement and the design of the deflector element 14 enables a centrically withdrawal of the fluidizied material from the receiving bin 2, whereby frictional forces established between the material and the bin wall 3 are minimized and, as a result, a smooth discharge or conveyance of the material is enabled.

It is preferred that the outlet opening 5 of the receiving bin 2 is arranged centrally with respect to the geometrical design of the receiving bin 2. That is, in the case of a cylindrical receiving bin 2 the outlet opening 5 is preferably provided at the location of the largest diameter or clear width cwb of the receiving bin 2, see for example figure 5. In the case of a squared receiving bin, the outlet opening is preferably arranged centrally with respect to a transverse direction running perpendicular to the vertical direction V as well as perpendicular to the horizontal direction H. In any case it is likewise preferred that the deflector element 14 is arranged centrally with respect to the geometrical design of the receiving bin 2. That is, in the case of the cylindrical receiving bin 2 shown here the deflector element 14 is arranged at the location of the largest diameter or clear width cwb of the receiving bin 2, see for example figure 5. In other words, the deflector element 14 extends centrally from the bin wall 3 of the receiving bin 2 with respect to a width wb of the receiving bin 2 when seen in cross-section. Furthermore, when seen in cross-section, the deflector element 14 extends along the horizontal direction H by a length ld being here about 50 % of the diameter or clear width cwb of the receiving bin 2. The deflector element 14 thus defines a passage 15 which extends from a center of the receiving bin 2 until the outlet opening 5 of the receiving bin 2. In the present case the deflector element 14 is arranged within the receiving bin 2 such that at least an upper part 17 of the deflector element 14 is arranged before the outlet opening 5 of the receiving bin 2 with respect to the vertical direction V when viewed from the inlet opening 4 of the receiving bin 2 towards the outlet opening 5 of the receiving bin 2. However, it is likewise conceivable that the deflector element 14 is arranged within the receiving bin 2 such that at least the upper part 17 of the deflector element 14 and the outlet opening 5 of the receiving bin 2 are arranged at essentially a same height with respect to the vertical direction V. In other words, an uppermost part of the deflector element 14 must not be located after the outlet opening 5 of the receiving bin 2 when viewed from the inlet opening 4 of the receiving bin 2 towards the outlet opening 5 of the receiving bin 2. The deflector element 14 can thus also be seen as a shield that shields the outlet opening 5 of the receiving bin from material or fluidized material within the receiving bin 2.

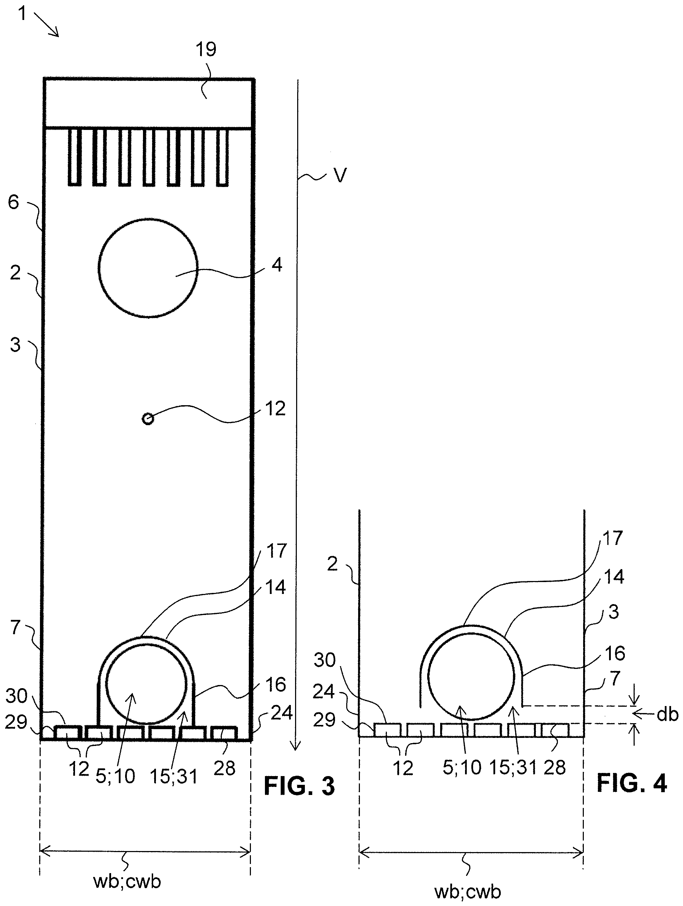

Various designs of the deflector element 14 are conceivable. For example, the deflector element 14, when seen in the longitudinal section, can have an essentially squared shape (see figures 1 and 2) or an essentially semi-circular shape (see figures 3 and 4). However, other designs are likewise possible. Moreover, it is conceivable that the deflector element 14, in particular its lower part 16, extends along the vertical direction V until it impinges on a bottom region 24 of the receiving bin 2, see figure 3. However, it is likewise conceivable that a distance db is formed between the lower part 16 of the deflector element 14 and the bottom region 24 of the receiving bin 2, see figure 4. The first fluidizing device 12 is arranged in the bottom region 24 of the receiving bin 2. Hence, in the former case the lower part 16 of the deflector element 14 extends along the vertical direction V up to the first fluidizing devices 12, in particular the gas-permeable elements 28. In the latter case a distance db is formed between the first fluidizing devices 12, in particular the gas-permeable elements 28, and the lower part 16 of the deflector element 14. In any case it is preferred that one or more first fluidizing devices 12 are arranged after the deflector element 14 when seen along the vertical direction V from the inlet opening 4 of the receiving bin 2 towards the outlet opening 5 of the receiving bin 2. In other words, it is preferred that the first fluidizing devices 12 extend through the passage 15 defined by the deflector element 14.

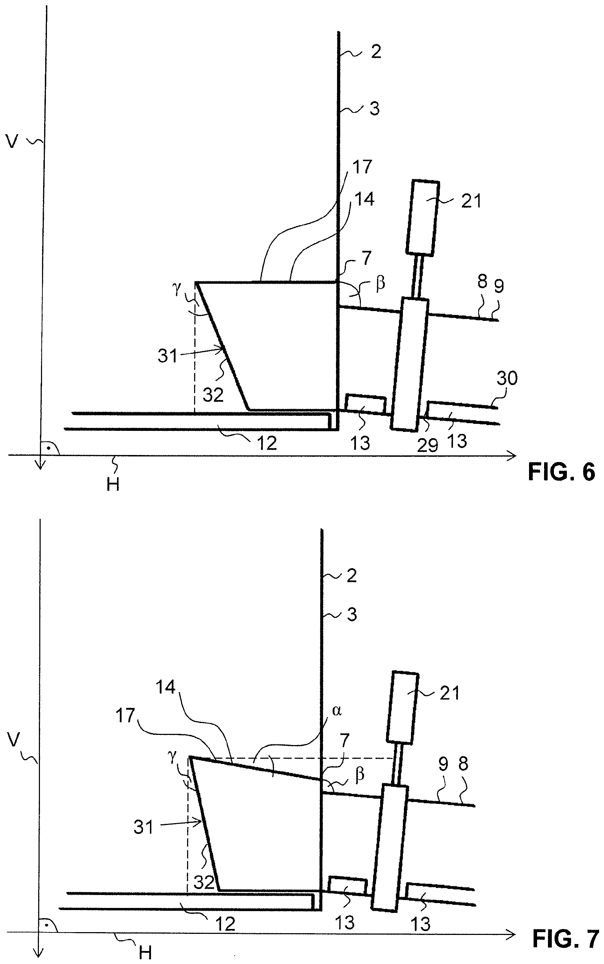

As clearly follows from a comparison of the deflector element 14 depicted in figures 6 and 7, it is conceivable that the deflector element 14, preferably its upper part 17, runs parallel to the horizontal direction H (see figure 6) or obliquely along the horizontal direction H (see figure 7). In the latter case it is preferred that the deflector element 14, preferably its upper part 17, defines an angle of inclination α of between about 1° to 15°, preferably between about 2° to 10°, particularly preferably between about 3° to 5° with respect to the horizontal direction H. Moreover, it is particularly preferred that the inclined deflector element 14 runs downwards with respect to the horizontal direction H when viewed in the direction of the outlet opening 5 of the receiving bin 2 so as to assist the free flowing characteristics of the fluidized material.

Moreover, and as follows from a comparison between figures 1 and 2 with figures 6 and 7, it is conceivable that the deflector element 14 defines an inlet or opening 31 leading into the passage 15 which is configured such, that it runs parallel to the vertical direction V (see figures 1 and 2) or inclined with respect to the vertical direction V (see figures 6 and 7). In the latter case it is conceivable that the deflector element 14 defines an angle γ between the vertical direction V and the proximal end edge 32 delimiting the inlet or opening 31 of the passage 15 of about 1° to 15°. An inclined inlet or opening 31 improves the material flow of the fluidized material into the passage 15.

**LIST OF REFERENCE SIGNS**

| | | | |
|---|---|---|---|
| 1 | suction device | 24 | bottom region |
| 2 | receiving bin | 25 | inlet |
| 3 | bin wall | 26 | exhaust duct |
| 4 | inlet opening | 27 | exhaust duct |
| 5 | outlet opening | 28 | gas-permeable element |
| 6 | upper region | 29 | housing |
| 7 | lower region | 30 | transport surface |
| 8 | material chamber | 31 | inlet |
| 9 | chamber wall | 32 | end edge |
| 10 | inlet opening | | |
| 11 | outlet opening | V | vertical direction |
| 12 | fluidizing device | H | horizontal direction |
| 13 | fluidizing device | cwb | clear width |
| 14 | deflector element | wb | width |
| 15 | passage | wm | width |
| 16 | lower part | lb | length |
| 17 | upper part | ld | length |
| 18 | exhaust device | lm | length |
| 19 | filter device | db | distance |
| 20 | limiting element | dm | cross-section |
| 21 | sluice device | α | angle |
| 22 | detection device | β | angle |
| 23 | detection device | γ | angle |

## Claims

1. A suction device (1) for discharging and/or conveying material, preferably powdery material, in particular bulk material, comprising:
- a receiving bin (2) extending along a vertical direction (V) and comprising a bin wall (3) with an inlet opening (4) and an outlet opening (5),
wherein the inlet opening (4) is arranged in an upper region (6) of the receiving bin (2) and the outlet opening (5) is arranged in a lower region (7) of the receiving bin (2) such, that the material to be discharged is suctioned into the receiving bin (2) through the inlet opening (4) and flows within the receiving bin (2) from the inlet opening (4) towards the outlet opening (5) along the vertical direction (V),
- a material chamber (8) comprising a chamber wall (9) with an inlet opening (10) and an outlet opening (11),
wherein the receiving bin (2) and the material chamber (8) are in connection with each other via the outlet opening (5) of the receiving bin (2) and the inlet opening (10) of the material chamber (8),
- an exhaust device (18) being in connection with the receiving bin (2),
wherein the exhaust device (18) is configured to remove air from within the receiving bin (2) towards an outside of the suction device (1), whereby a negative pressure is generated within the suction device (1), and
- at least a first fluidizing device (12) and at least a second fluidizing (13),
wherein the first fluidizing device (12) is arranged in the receiving bin (2) and the second fluidizing device (13) is arranged in the material chamber (8),
wherein the first fluidizing device (13) is configured to fluidize the material being introduced into the receiving bin (2) and to transport the fluidized material from the receiving bin (2) into the material chamber (8), and
wherein the second fluidizing device (13) is configured to transport the fluidized material through the material chamber (8) and to discharge the fluidized material from the material chamber (8) via the outlet opening (11) of the material chamber (8),
**characterized in that** the suction device (1) further comprises a deflector element (14) which is arranged in the lower region (7) of the receiving bin (2) and which extends from the bin wall (3) at least partially into the receiving bin (2) along a horizontal direction (H) running perpendicularly to the vertical direction (V) so as to define a passage (15), wherein the deflector element (14) is arranged and configured to deflect the fluidized material impinging on the deflector element (14) such, that the fluidized material is transported to the material chamber (8) through the passage (15), wherein a lower part (16) of the deflector element (14) extends all the way down to the bottom region of the receiving bin (2) with respect to the vertical direction.

2. The suction device (1) according to claim 1, wherein the receiving bin (2), when seen in cross-section, defines a clear width (cwb) along the horizontal direction (H), and wherein the deflector element (14) extends along the horizontal direction (H) by a length (ld) being between about 30% to 70%, preferably about 50% of the clear width (cwb) of the receiving bin (2).

3. The suction device (1) according to any one of the preceding claims, wherein at least an upper part (17) of the deflector element (14) is arranged before the outlet opening (5) of the receiving bin (2) with respect to the vertical direction (V) when viewed from the inlet opening (4) of the receiving bin (2) towards the outlet opening (5) of the receiving bin (2); or
wherein at least the upper part (17) of the deflector element (14) and the outlet opening (5) of the receiving bin (2) are arranged at essentially a same height with respect to the vertical direction (V).

4. The suction device (1) according to any one of the preceding claims, wherein the deflector element (14), preferably its upper part (17), runs obliquely along the horizontal direction (H); or wherein the deflector element (14), preferably its upper part (17), runs parallel to the horizontal direction (H).

5. The suction device (1) according to claim 4,
wherein the deflector element (14), preferably its upper part (17), runs obliquely along the horizontal direction (H) and defines an angle of inclination (α) of between about 1° to 15°, preferably between about 2° to 10°, particularly preferably between about 3° to 5° with respect to the horizontal direction (H), and/or
wherein the deflector element (14) runs downwards with respect to the horizontal direction (H) and when viewed in the direction of the outlet opening (5) of the receiving bin (2).

6. The suction device (1) according to any one of the preceding claims, wherein the deflector element (14) extends centrally from the bin wall (3) of the receiving bin (2) with respect to a width (wb) of the receiving bin (2) when seen in cross-section.

7. The suction device (1) according to any one of the preceding claims, wherein the receiving bin (2) and the material chamber (8) are arranged immediately adjacent to one another.

8. The suction device (1) according to any one of the preceding claims, wherein the material chamber (8) is arranged at an angle (β) with respect to the receiving bin (2).

9. The suction device (1) according to any one of the preceding claims, wherein a filter device (19) is arranged within the receiving bin (2) in the region of the connection between the receiving bin (2) and the exhaust device (18), or
wherein the filter device (19) is arranged outside the receiving bin (2) and between the receiving bin (2) and the exhaust device (18).

10. suction device (1) according to any one of the preceding claims, wherein the suction device (1) is configured such, that the negative pressure generated within the suction device (1) is maintained by means of a material column that is formed by the material being fed into the receiving bin (2), and/or
wherein the suction device (1) comprises at least one sluice device (21) being configured and arranged so as to maintain the negative pressure generated within the receiving bin (2), the sluice device preferably being a gate valve (21), a rotary feeder or a valve lock

11. The suction device (1) according to any one of the preceding claims, wherein a limiting element (20) is arranged within the material chamber (8), the limiting element (20) limits a cross-section (dm) of the material chamber (8) such, that a desired maximum flow rate of the fluidized material through the material chamber (8) is obtained.

12. The suction device (1) according to any one of the preceding claims, further comprising a pneumatic control, wherein the pneumatic control comprises the first fluidizing device (12) and/or the second fluidizing device (13) and is configured to adjust a height of the material and/or of the fluidized material within the receiving bin (2) and/or to adjust a flow rate of the fluidized material through the material chamber (8).

13. The suction device (1) according to any one of the preceding claims, further comprising at least a first detection device (22) and/or at least a second detection device (23),
wherein the first detection device (22) is arranged in the receiving bin (2) and is configured to detect a first state such as a height of the material or of the fluidized material within the receiving bin (2),
wherein the second detection device (23) is arranged in the material chamber (8) and is configured to detect a second state such as a height or a flow rate of the fluidized material within the material chamber (8), and
wherein the first detection device (22) and/or the second detection device (23) preferably are level sensors or level transmitters.

14. A method for discharging and/or conveying material, preferably from a ship, using a suction device (1) as claimed in any one of the preceding claims, the method comprising the steps of:
- Suctioning the material to be discharged into the receiving bin (2);
- Fluidizing the material being introduced into the receiving bin (2) using the first fluidizing device (12);
- Transporting the fluidized material from the receiving bin (2) into the material chamber (8) using the first fluidizing device (12);
- Transporting the fluidized material in the material chamber (8) using the second fluidizing device (13) and discharging the fluidized material from the material chamber (8) via the outlet opening (11) of the material chamber (8),
wherein the fluidized material impinges on the deflector element (14) such, that the impinging fluidized material is deflected and transported to the material chamber (8) through the passage (15) defined by the deflector element (14).

## Patentansprüche

1. Saugvorrichtung (1) zum Entladen und/oder Fördern von Material, vorzugsweise von pulverförmigem Material, insbesondere von Schüttgut, umfassend:
- einen Aufnahmebehälter (2), der sich entlang einer vertikalen Richtung (V) erstreckt und eine Behälterwand (3) mit einer Einlassöffnung (4) und einer Auslassöffnung (5) umfasst,
wobei die Einlassöffnung (4) in einem oberen Bereich (6) des Aufnahmebehälters (2) und die Auslassöffnung (5) in einem unteren Bereich (7) des Aufnahmebehälters (2) derart angeordnet ist, dass das auszutragende Material durch die Einlassöffnung (4) in den Aufnahmebehälter (2) gesaugt wird und innerhalb des Aufnahmebehälters (2) von der Einlassöffnung (4) zur Auslassöffnung (5) entlang der vertikalen Richtung (V) fliesst,
- eine Materialkammer (8), die eine Kammerwand (9) mit einer Einlassöffnung (10) und einer Auslassöffnung (11) umfasst,
wobei der Aufnahmebehälter (2) und die Materialkammer (8) über die Auslassöffnung (5) des Aufnahmebehälters (2) und die Einlassöffnung (10) der Materialkammer (8) miteinander in Verbindung stehen,
- eine Absaugvorrichtung (18), die mit dem Aufnahmebehälter (2) in Verbindung steht,
wobei die Absaugvorrichtung (18) derart ausgebildet ist, dass sie Luft aus dem Inneren des Aufnahmebehälters (2) in Richtung einer Aussenseite der Saugvorrichtung (1) entfernt, wodurch ein Unterdruck innerhalb der Saugvorrichtung (1) erzeugt wird, und
- mindestens eine erste Fluidisierungsvorrichtung (12) und mindestens eine zweite Fluidisierungsvorrichtung (13),
wobei die erste Fluidisierungsvorrichtung (12) im Aufnahmebehälter (2) und die zweite Fluidisierungsvorrichtung (13) in der Materialkammer (8) angeordnet ist,
wobei die erste Fluidisierungsvorrichtung (13) derart ausgebildet ist, dass sie das in den Aufnahmebehälter (2) eingeführte Material fluidisiert und das fluidisierte Material aus dem Aufnahmebehälter (2) in die Materialkammer (8) transportiert, und
wobei die zweite Fluidisierungsvorrichtung (13) derart ausgebildet ist, dass sie das fluidisierte Material durch die Materialkammer (8) transportiert und das fluidisierte Material aus der Materialkammer (8) über die Auslassöffnung (11) der Materialkammer (8) abgibt,
**dadurch gekennzeichnet, dass** die Saugvorrichtung (1) weiter ein Ablenkelement (14) umfasst, das im unteren Bereich (7) des Aufnahmebehälters (2) angeordnet ist und das sich von der Behälterwand (3) zumindest teilweise in den Aufnahmebehälter (2) entlang einer horizontalen Richtung (H) erstreckt, die senkrecht zur vertikalen Richtung (V) verläuft, um einen Durchgang (15) zu definieren, wobei das Ablenkelement (14) derart angeordnet und ausgebildet ist, dass es das auf das Ablenkelement (14) auftreffende fluidisierte Material so ablenkt, dass das fluidisierte Material durch den Durchgang (15) in die Materialkammer (8) transportiert wird, wobei sich ein unterer Teil (16) des Ablenkelements (14) in Bezug auf die vertikale Richtung ganz nach unten zum Bodenbereich des Aufnahmebehälters (2) erstreckt.

2. Saugvorrichtung (1) nach Anspruch 1, wobei der Aufnahmebehälter (2) im Querschnitt gesehen eine lichte Weite (cwb) entlang der horizontalen Richtung (H) definiert, und wobei sich das Ablenkelement (14) entlang der horizontalen Richtung (H) über eine Länge (Id) erstreckt, die zwischen etwa 30 % bis 70 %, vorzugsweise etwa 50 % der lichten Weite (cwb) des Aufnahmebehälters (2) beträgt.

3. Saugvorrichtung (1) nach einem der vorhergehenden Ansprüche, wobei zumindest ein oberer Teil (17) des Ablenkelements (14) in Bezug auf die vertikale Richtung (V) von der Einlassöffnung (4) des Aufnahmebehälters (2) zur Auslassöffnung (5) des Aufnahmebehälters (2) gesehen vor der Auslassöffnung (5) des Aufnahmebehälters (2) angeordnet ist; oder
wobei zumindest der obere Teil (17) des Ablenkelements (14) und die Auslassöffnung (5) des Aufnahmebehälters (2) auf im Wesentlichen gleicher Höhe in Bezug auf die vertikale Richtung (V) angeordnet sind.

4. Saugvorrichtung (1) nach einem der vorhergehenden Ansprüche, wobei das Ablenkelement (14), vorzugsweise dessen oberer Teil (17), schräg in horizontaler Richtung (H) verläuft; oder
wobei das Ablenkelement (14), vorzugsweise sein oberer Teil (17), parallel zur horizontalen Richtung (H) verläuft.

5. Saugvorrichtung (1) nach Anspruch 4, wobei das Ablenkelement (14), vorzugsweise dessen oberer Teil (17), schräg entlang der horizontalen Richtung (H) verläuft und einen Neigungswinkel (α) zwischen etwa 1° bis 15°, vorzugsweise zwischen etwa 2° bis 10°, besonders bevorzugt zwischen etwa 3° bis 5° gegenüber der horizontalen Richtung (H) definiert, und/oder
wobei das Ablenkelement (14) in Bezug auf die horizontale Richtung (H) und in Richtung der Auslassöffnung (5) des Aufnahmebehälters (2) gesehen nach unten verläuft.

6. Saugvorrichtung (1) nach einem der vorhergehenden Ansprüche, wobei sich das Ablenkelement (14) im Querschnitt gesehen mittig von der Behälterwand (3) des Aufnahmebehälters (2) aus erstreckt, bezogen auf eine Breite (wb) des Aufnahmebehälters (2).

7. Saugvorrichtung (1) nach einem der vorhergehenden Ansprüche, wobei der Aufnahmebehälter (2) und die Materialkammer (8) unmittelbar nebeneinander angeordnet sind.

8. Saugvorrichtung (1) nach einem der vorhergehenden Ansprüche, wobei die Materialkammer (8) in einem Winkel (β) zum Aufnahmebehälter (2) angeordnet ist.

9. Saugvorrichtung (1) nach einem der vorhergehenden Ansprüche, wobei innerhalb des Aufnahmebehälters (2) im Bereich der Verbindung zwischen dem Aufnahmebehälter (2) und der Absaugvorrichtung (18) eine Filtervorrichtung (19) angeordnet ist, oder
wobei die Filtervorrichtung (19) ausserhalb des Aufnahmebehälters (2) und zwischen dem Aufnahmebehälter (2) und der Absaugvorrichtung (18) angeordnet ist.

10. Saugvorrichtung (1) nach einem der vorhergehenden Ansprüche, wobei die Saugvorrichtung (1) derart ausgebildet ist, dass der in der Saugvorrichtung (1) erzeugte Unterdruck mittels einer Materialsäule aufrechterhalten wird, die durch das in den Aufnahmebehälter (2) eingefüllte Material gebildet wird, und/oder
wobei die Saugvorrichtung (1) mindestens eine Schleusenvorrichtung (21) umfasst, die derart ausgebildet und angeordnet ist, dass sie den innerhalb des Aufnahmebehälters (2) erzeugten Unterdruck aufrechterhält, wobei die Schleusenvorrichtung vorzugsweise ein Schieberventil (21), eine Zellenradschleuse oder eine Ventilsperre ist.

11. Saugvorrichtung (1) nach einem der vorhergehenden Ansprüche, wobei innerhalb der Materialkammer (8) ein Begrenzungselement (20) angeordnet ist, das einen Querschnitt (dm) der Materialkammer (8) derart begrenzt, dass eine gewünschte maximale Durchflussmenge des fluidisierten Materials durch die Materialkammer (8) erreicht wird.

12. Saugvorrichtung (1) nach einem der vorhergehenden Ansprüche, weiter umfassend eine pneumatische Steuerung, wobei die pneumatische Steuerung die erste Fluidisierungsvorrichtung (12) und/oder die zweite Fluidisierungsvorrichtung (13) umfasst und ausgebildet ist, um eine Höhe des Materials und/oder des fluidisierten Materials innerhalb des Aufnahmebehälters (2) einzustellen und/oder eine Durchflussrate des fluidisierten Materials durch die Materialkammer (8) einzustellen.

13. Saugvorrichtung (1) nach einem der vorhergehenden Ansprüche, weiter umfassend mindestens eine erste Detektionsvorrichtung (22) und/oder mindestens eine zweite Detektionsvorrichtung (23),
wobei die erste Detektionsvorrichtung (22) in dem Aufnahmebehälter (2) angeordnet und derart ausgebildet ist, dass sie einen ersten Zustand wie eine Höhe des Materials oder des fluidisierten Materials innerhalb des Aufnahmebehälters (2) erfasst,
wobei die zweite Detektionsvorrichtung (23) in der Materialkammer (8) angeordnet und derart ausgebildet ist, dass sie einen zweiten Zustand wie eine Höhe oder eine Fliessgeschwindigkeit des fluidisierten Materials innerhalb der Materialkammer (8) erfasst, und
wobei die erste Detektionsvorrichtung (22) und/oder die zweite Detektionsvorrichtung (23) vorzugsweise Füllstandsensoren oder Füllstandmessgeräte sind.

14. Verfahren zum Entladen und/oder Fördern von Material, vorzugsweise von einem Schiff, unter Verwendung einer Saugvorrichtung (1) nach einem der vorangehenden Ansprüche, wobei das Verfahren die folgenden Schritte umfasst:
- Saugen des zu entleerenden Materials in den Aufnahmebehälter (2);
- Fluidisieren des in den Aufnahmebehälter (2) eingeführten Materials mit Hilfe der ersten Fluidisierungsvorrichtung (12);
- Transportieren des fluidisierten Materials aus dem Aufnahmebehälter (2) in die Materialkammer (8) mittels der ersten Fluidisierungsvorrichtung (12);
- Transportieren des fluidisierten Materials in der Materialkammer (8) mittels der zweiten Fluidisierungsvorrichtung (13) und Entladen des fluidisierten Materials aus der Materialkammer (8) über die Austrittsöffnung (11) der Materialkammer (8),
wobei das fluidisierte Material auf das Ablenkelement (14) auftrifft, so dass das auftreffende fluidisierte Material abgelenkt und durch den von dem Ablenkelement (14) definierten Durchgang (15) in die Materialkammer (8) transportiert wird.

## Revendications

1. Un dispositif d'aspiration (1) pour décharger et/ou transporter un matériau, de préférence un matériau poudreux, en particulier un matériau en vrac, comprenant :
- un bac de réception (2) s'étendant le long d'une direction verticale (V) et comprenant une paroi de bac (3) avec une ouverture d'entrée (4) et une ouverture de sortie (5),
dans lequel l'ouverture d'entrée (4) est disposée dans une zone supérieure (6) du bac de réception (2) et l'ouverture de sortie (5) est disposée dans une zone inférieure (7) du bac de réception (2) de sorte que le matériau à décharger est aspiré dans le bac de réception (2 ) à travers l'ouverture d'entrée (4) et s'écoule à l'intérieur du bac de réception (2) depuis l'ouverture d'entrée (4) vers l'ouverture de sortie (5) le long de la direction verticale (V),
- une chambre de matériau (8) comprenant une paroi de chambre (9) avec une ouverture d'entrée (10) et une ouverture de sortie (11),
dans laquelle le bac de réception (2) et la chambre de matériau (8) sont reliés l'un à l'autre via l'ouverture de sortie (5) du bac de réception (2) et l'ouverture d'entrée (10) de la chambre de matière (8),
- un dispositif d'évacuation (18) étant relié au bac de réception (2),
dans lequel le dispositif d'évacuation (18) est configuré pour évacuer l'air de l'intérieur du bac de réception (2) vers l'extérieur du dispositif d'aspiration (1), moyennant quoi une pression négative est générée à l'intérieur du dispositif d'aspiration (1), et
- au moins un premier dispositif de fluidisation (12) et au moins un deuxième dispositif de fluidisation (13),
dans lequel le premier dispositif de fluidisation (12) est disposé dans le bac de réception (2) et le deuxième dispositif de fluidisation (13) est disposé dans la chambre de matière (8),
dans lequel le premier dispositif de fluidisation (13) est configuré pour fluidifier le matériau introduit dans le bac de réception (2) et pour transporter le matériau fluidisé du bac de réception (2) dans la chambre de matériau (8), et
dans lequel le deuxième dispositif de fluidisation (13) est configuré pour transporter le matériau fluidisé à travers la chambre de matériau (8) et pour décharger le matériau fluidisé de la chambre de matériau (8) via l'ouverture de sortie (11) de la chambre de matériau (8),
**caractérisé en ce que** le dispositif d'aspiration (1) comprend en outre un élément déflecteur (14) qui est disposé dans la zone inférieure (7) du bac de réception (2) et qui s'étend depuis la paroi de bac (3) au moins partiellement dans le bac de réception (2) le long d'une direction horizontale (H) s'étendant perpendiculairement à la direction verticale (V) de manière à définir un passage (15), dans lequel l'élément déflecteur (14) est disposé et configuré pour dévier le matériau fluidisé frappant l'élément déflecteur (14) de telle manière que le matériau fluidisé est transporté vers la chambre de matériau (8) à travers le passage (15), dans lequel une partie inférieure (16) de l'élément déflecteur (14) s'étend entièrement vers le bas, jusqu'au niveau d'une région inférieure du bac de réception (2 ), par rapport à la direction verticale (V).

2. Le dispositif d'aspiration (1) selon la revendication 1, dans lequel le bac de réception (2), lorsqu'il est vu en section transversale, définit une largeur libre ("cwb") le long de la direction horizontale (H), et dans lequel l'élément déflecteur (14) s'étend le long de la direction horizontale (H) d'une longueur ("Id") comprise entre environ 30 % et 70 %, de préférence environ 50 % de la largeur libre ("cwb") du bac de réception (2).

3. Le dispositif d'aspiration (1) selon l'une quelconque des revendications précédentes, dans lequel au moins une partie supérieure (17) de l'élément déflecteur (14) est disposée avant l'ouverture de sortie (5) du bac de réception (2) par rapport à la direction verticale (V), vue depuis l'ouverture d'entrée (4) du bac de réception (2) vers l'ouverture de sortie (5) du bac de réception (2); ou
dans lequel au moins la partie supérieure (17) de l'élément déflecteur (14) et l'ouverture de sortie (5) du bac de réception (2) sont disposées essentiellement à la même hauteur par rapport à la direction verticale (V).

4. Le dispositif d'aspiration (1) selon l'une quelconque des revendications précédentes, dans lequel l'élément déflecteur (14), de préférence sa partie supérieure (17), s'étend obliquement le long de la direction horizontale (H) ; ou
dans lequel l'élément déflecteur (14), de préférence sa partie supérieure (17), s'étend parallèlement à la direction horizontale (H).

5. Le dispositif d'aspiration (1) selon la revendication 4, dans lequel l'élément déflecteur (14), de préférence sa partie supérieure (17), s'étend obliquement le long de la direction horizontale (H) et définit un angle d'inclinaison (α) compris entre environ 1° à 15°, de préférence entre environ 2° et 10°, de manière particulièrement préférée entre environ 3° et 5° par rapport à la direction horizontale (H), et/ou
dans laquelle l'élément déflecteur (14) s'étend vers le bas par rapport à la direction horizontale ( H) et lorsqu'il est vu en direction de l'ouverture de sortie (5) du bac de réception (2).

6. Le dispositif d'aspiration (1) selon l'une quelconque des revendications précédentes, dans lequel l'élément déflecteur (14) s'étend au centre de la paroi de bac (3) du bac de réception (2) par rapport à une largeur ("wb") du bac de réception (2) lorsqu'il est vu en section transversale.

7. Le dispositif d'aspiration (1) selon l'une quelconque des revendications précédentes, dans lequel le bac de réception (2) et la chambre de matériau (8) sont disposés immédiatement adjacents l'un à l'autre.

8. Le dispositif d'aspiration (1) selon l'une quelconque des revendications précédentes, dans lequel la chambre de matériau (8) est disposée selon un angle (β) par rapport au bac de réception (2).

9. Le dispositif d'aspiration (1) selon l'une quelconque des revendications précédentes, dans lequel un dispositif de filtrage (19) est disposé à l'intérieur du bac de réception (2) dans la zone de la liaison entre le bac de réception (2) et le dispositif d'évacuation (18), ou
dans lequel le dispositif de filtrage (19) est disposé à l'extérieur du bac de réception (2) et entre le bac de réception (2) et le dispositif d'évacuation (18).

10. Le dispositif d'aspiration (1) selon l'une quelconque des revendications précédentes, dans lequel le dispositif d'aspiration (1) est configuré de telle sorte que la pression négative générée à l'intérieur du dispositif d'aspiration (1) est maintenue au moyen d'une colonne de matériau qui est formée par le matériau étant alimenté dans le bac de réception (2), et/ou
dans lequel le dispositif d'aspiration (1) comprend au moins un dispositif de sas (21) étant configuré et disposé de manière à maintenir la pression négative générée à l'intérieur du bac de réception (2), le dispositif de sas étant de préférence une vanne d'arrêt, (21), un alimentateur rotatif ou un verrou à vanne.

11. Le dispositif d'aspiration (1) selon l'une quelconque des revendications précédentes, dans lequel un élément de limitation (20) est disposé à l'intérieur de la chambre de matériau (8), l'élément de limitation (20) limitant une section transversale ("dm") de la chambre de matériau (8) de sorte qu'un débit maximal souhaité du matériau fluidisé à travers la chambre de matériau (8) est obtenu.

12. Le dispositif d'aspiration (1) selon l'une quelconque des revendications précédentes, comprenant en outre une commande pneumatique, dans lequel la commande pneumatique comprend le premier dispositif de fluidisation (12) et/ou le deuxième dispositif de fluidisation (13) et est configurée pour régler une hauteur du matériau et/ou du matériau fluidisé à l'intérieur du bac de réception (2) et/ou pour régler un débit du matériau fluidisé à travers la chambre de matériau (8).

13. Le dispositif d'aspiration (1) selon l'une quelconque des revendications précédentes, comprenant en outre au moins un premier dispositif de détection (22) et/ou au moins un deuxième dispositif de détection (23),
dans lequel le premier dispositif de détection (22) est agencé dans le bac de réception (2) et est configuré pour détecter un premier état tel qu'une hauteur du matériau ou du matériau fluidisé à l'intérieur du bac de réception (2),
dans lequel le deuxième dispositif de détection (23) est agencé dans la chambre de matériau (8) et est configuré pour détecter un deuxième état tel qu'une hauteur ou un débit du matériau fluidisé à l'intérieur de la chambre de matériau (8), et
dans lequel le premier dispositif de détection (22) et/ou le deuxième dispositif de détection (23) sont de préférence des capteurs de niveau ou des transmetteurs de niveau.

14. Un procédé de déchargement et/ou de transport de matériau, de préférence à partir d'un navire, utilisant un dispositif d'aspiration (1) selon l'une quelconque des revendications précédentes, le procédé comprenant les étapes consistant à :
- aspirer le matériau à décharger dans le bac de réception (2) ;
- fluidiser le matériau en cours d'introduction dans le bac de réception (2) à l'aide du premier dispositif de fluidisation (12) ;
- transporter le matériau fluidisé du bac de réception (2) dans la chambre de matière (8) à l'aide du premier dispositif de fluidisation (12) ;
- transporter le matériau fluidisé dans la chambre de matériau (8) à l'aide du deuxième dispositif de fluidisation (13) et décharger le matériau fluidisé de la chambre de matériau (8) via l'ouverture de sortie (11) de la chambre de matériau (8),
dans lequel le matériau fluidisé frappe l'élément déflecteur (14) de sorte que le matériau fluidisé frappant est dévié et transporté vers la chambre de matériau (8) à travers le passage (15) défini par l'élément déflecteur (14).
